# EUROPÄISCHE PATENTSCHRIFT

(11) **EP 2 593 265 B1**
(45) Veröffentlichungstag und Bekanntmachung des Hinweises auf die Patenterteilung: **24.06.2015**
(21) Anmeldenummer: 11732462.4
(22) Anmeldetag: 15.07.2011
(51) Int. Cl.: B23K 20/12

(54) **VERFAHREN UND VORRICHTUNG ZUM RÜHRREIBSCHWEISSEN**
METHOD AND DEVICE FOR FRICTION STIR WELDING
PROCÉDÉ ET DISPOSITIF DE SOUDAGE PAR FRICTION-MALAXAGE

(30) Priorität: 16.07.2010 US 364837 P; 16.07.2010 DE 102010027291
(43) Veröffentlichungstag der Anmeldung: 22.05.2013
(73) Patentinhaber: Airbus Operations GmbH, 21129 Hamburg (DE)
(72) Erfinder: TAVARES, Sergio, P-3720-031 Carregosa (PT); PACCHIONE, Mario, 22605 Hamburg (DE); OSTERSEHLTE, Hartmut, 28199 Bremen (DE)
(74) Vertreter: Maiwald Patentanwalts GmbH
(86) Internationale Anmeldenummer: PCT/EP2011/062130
(87) Internationale Veröffentlichungsnummer: WO 2012/007573

(56) Entgegenhaltungen:
- WO-A1-00/02704
- WO-A1-93/10935
- US-A1- 2006 231 594
- US-B1- 6 199 745
- US-B1- 6 237 835

## Beschreibung

Die Erfindung betrifft ein Verfahren zum Rührreibschweißen nach dem Oberbegriff des Patentanspruchs 1 und eine Vorrichtung zum Rührreibschweißen nach dem Oberbegriff des Patentanspruchs 6.

Rührreibschweißen ermöglicht das stoffflüssige Fügen zweier mit herkömmlichen Schmelzschweißverfahren nicht bzw. nur sehr schwer schweißbarer Bauteile. Es wird vornehmlich zum Verschweißen von Leichtmetallen eingesetzt. Eine Zugabe eines Schweißzusatzstoffes ist nicht notwendig. Bei einem bekannten Rührreibverfahren wird, wie beispielsweise in der WO 93/10935 A1 beschrieben, ein Rührstift bzw. Schweißstift, der sich von einer Schulterfläche eines sich drehenden Zylinders erstreckt, in einem Stumpfstoß zweier Bauteile gedrückt und entlang des Stumpfstoßes geführt, wobei der Zylinder mit seiner Schulterfläche die Bauteile mit einer einseitigen Prozesskraft beaufschlagt. Durch die Reibung zwischen der Schulterfläche und den Bauteilen entsteht Wärme, mittels der das Material in dem Stumpfstoß plastifiziert wird und das dann durch das Eintauchen des Rührstifts verrührt wird. Die Bauteile sind im Bereich des Stumpfstoßes bzw. der Fügezone auf einem Gegenhalter abgestützt, die aufgrund von den Prozesskräften und Berührungen mit dem Rührstift einem hohen Verschleiß ausgesetzt und somit entsprechend sporadisch auszutauschen ist. Insbesondere bei sphärisch geformten großflächigen Bauteilen bzw. bei sphärisch verlaufenden Fügezonen, wie bei Schalenelementen eines Flugzeugrumpfes, steigt der Verschleiß der Gegenhalter beträchtlich an, da neben den Prozesskräften noch weitere Faktoren wie unterschiedliche Wärmeausdehungskoeffizienten und Bauteiltoleranzen den Zustand der Auflage zusätzlich negativ beeinflussen. Jedoch ist insbesondere der Abstand zwischen dem Rührstiftkopf bzw. der Rührstiftspitze und dem Gegenhalter ein sehr kritische Prozessgröße und genau einzuhalten, um eine ausreichende Verrührung des plastifizierten Materials zu ermöglichen. Eine bereits minimal zu geringe Eintauchtiefe des Rührstiftes, d.h. eine zu große Beabstandung der Rührstiftspitze von der Auflage, führt zu einer merklichen Minderung der Schweißnahtqualität. Zusätzlich führen Dickenschwankungen der Bauteile und unterschiedliche Spaltbreiten im Bereich der Fügezone zu einer Änderung der Eintauchtiefe des Rührstiftes. Darüber hinaus neigt der Rührstift dazu, aufgrund der auftretenden Prozesskräfte in Querrichtung der Fügezone auszuwandern, was ebenfalls zu einer Minderung der Schweißnahtqualität führt.

Eine bekannte Lösung zur Berücksichtigung zumindest der Dickenschwankungen der Bauteile im Bereich der Fügezone sieht daher vor, die Schulterfläche kraftkontrolliert mit einer konstanten Kraft gegen die Bauteile zu drücken und den Rührstift entlang seiner Hochachse verfahrbar und somit positionskontrolliert auszuführen. Hierzu ist beispielsweise in Schweißrichtung vor dem Rührstift eine Tasteinrichtung zum Ertasten von Materialunebenheiten bzw. Dickenveränderungen der Bauteile vorgesehen, die diese dann unmittelbar an einen Stellantrieb zur Einstellung der Eintauchtiefe des Rührstiftes melden. Allerdings ist eine derartige Steuerung bzw. Regelung sowohl vorrichtungstechnisch als auch steuerungstechnisch aufwendig.

Eine bekannte vorrichtungs- und verfahrenstechnische Lösung, die eine stets ausreichende Eintauchtiefe bzw. Verrührung gewährleistet, ist ebenfalls in der WO 93/10935 A1 und in der WO 00/02699 A1 gezeigt. Das hier beschriebene sogenannte "Bobbin-Tool" hat zwei gegenüberliegende Schulterflächen, zwischen denen die Bauteile eingespannt werden. Die eine Schulterfläche wird von dem Zylinder gebildet und die andere Schulterfläche von einem tellerartigen Kopf. Der Schweißstift durchsetzt den Zylinder und ist in diesem drehend gelagert ist. Bei diesem Verfahren werden die Bauteile im Stumpfstoßbereich mit zueinander entgegengesetzt gleich großen Prozesskräften beaufschlagt, so dass das Rührreibschweißen quasi vertikalkraftneutral erfolgt. Vorteile dieses Verfahrens sind neben der stets ausreichenden Eintauchtiefe und dem Spurhalten des Rührstiftes insbesondere ein homogener Wärmeeintrag und ein geringer Verzug der Bauteile. Der Rührstift wird jedoch hoch belastet, da über ihn sowohl die Kräfte zum Drehen des Tellers als auch die Kräfte zum transversalen Verfahren des Tellers eingeleitet werden. Weitere Nachteile sind ein Nahteinfall auf Seiten der Tellerfläche (zweite Schulterfläche) sowie eine verhältnismäßig aufwendige Steuer- bzw. Regelungstechnik. Des Weiteren ist das Schweißen dünnwandinger Bauteile aufgrund der hohen Wärmeeinleitung problematisch.

Jüngste Entwicklungen sehen daher Schweißwerkzeuge mit einer stationären nicht rotierenden Schulter und einem rotierenden Rührstift vor. Hierdurch wird durch die Schulter keine Wärme in die Bauteil eingeleitet, sondern nur durch den Rührstift.

Bei gebogenen Bauteilbereichen schlägt das US-Patent US 6,237,835 B1, der als nächstkommander Stand der Technik gegenüber den Gegenstand der Erfindung angesehen wird, einen in Längsrichtung der Naht verfahrbaren Schlitten vor, der an einer Rückseite der Bauteile geführt ist und mit dem Rührstift beispielsweise über Formschluss in Wirkeingriff steht, so dass der Schlitten quasi gegen die Rückseite gezogen wird und die Bauteilbereiche zwischen der Schulterfläche und dem Schlitten eingespannt sind. Allerdings lässt sich mit dieser Lösung nicht auf variierende Materialstärken während des Schweißprozesses reagieren.

Weiterer Stand der Technik ist in der US6199745B1, US2006231594A1 und in der US20030201307A1 gezeigt.

Aufgabe der vorliegenden Erfindung ist es, ein Verfahren zum Verbinden von zwei Bauteilen durch Rührreibschweißen, das die vorgenannten Nachteile beseitigt und eine Schweißnaht mit einer hohen Schweißqualität ermöglicht, sowie eine Vorrichtung zur Durchführung eines derartigen Verfahrens zu schaffen.

Diese Aufgabe wird gelöst durch ein Verfahren mit den Merkmalen des Patentanspruchs 1 sowie durch eine Vorrichtung mit den Merkmalen des Patentanspruchs 6.

Bei einem erfindungsgemäßen Verfahren zum Verbinden von zwei Bauteilen durch Rührreibschweißen mit einem Werkzeug, das eine Schulterfläche zum Beaufschlagen der Bauteile mit einer Prozesskraft im Bereich einer Fügezone und einen rotierenden Rührstift zum Verrühren von plastifiziertem Material oder zum Plastifizieren und Verrühren der Bauteile im Bereich der Fügezone aufweist, taucht der Rührstift mit einem Abschnitt verschiebbar in einen Schlitten ein, auf dem die Bauteile abgestützt werden, der entlang der Fügezone an einer von dem Werkzeug abgewandten Seite der Bauteile geführt wird. Hierdurch wird die Fügezone in Richtung ihrer Hochachse stets von dem Rührstift durchsetzt, so dass die Einstellung einer Eintauchtiefe entfällt und eine vollständige Verrührung des plastifizierten Materials ermöglicht wird. Gleichzeitig dient der Schlitten als Gegenhalter, so dass die Bauteile beim Verschweißen sicher abgestützt sind. Dadurch, dass der Rührstift und der Schlitten in Richtung der Hochachse relativ zueinander verschiebbar bzw. verfahrbar sind, kompensiert die Vorrichtung Dickenänderung der Bauteile selbsttätig. Ein Stellantrieb zum Verfahren des Rührstiftes entlang seiner Hochachse zur Regulierung der Eintauchtiefe ist nicht notwendig. Somit ist eine reine kraftkontrollierte Steuerung des Werkzeugs möglich. D.h., das Werkzeug kann mit einer konstanten Kraft gegen die Bauteile gedrückt werden. Eine separate Einrichtung zum Ertasten der in Schweißrichtung dem Werkzeug vorgelagerten Oberflächengeometrie zur Einstellung der Eintauchtiefe des Rührstiftes ist nicht notwendig.

Bei einem bevorzugten Ausführungsbeispiel wird der Schlitten über einen Wirkeingriff von dem Rührstift mitgeführt. Hierdurch kann die Steuerung der Vorrichtung bzw. des Werkzeugs weiter vereinfacht werden, da kein separater Schlittenantrieb erforderlich ist.

Bei einem anderen Ausführungsbeispiel wird der Schlitten jedoch über einen eigenen Antrieb zumindest unterstützend zum Rührstift angetrieben. Dies ist insbesondere beim Verschweißen von dickwandigen Bauteilen zur Rührstiftentlastung vorteilhaft.

Die Position des Werkzeugs in der x-y-Ebene kann über die Position des Schlittens definiert werden. Dies ist insbesondere dann vorteilhaft, wenn das Werkzeug zum Beispiel über einen Roboterarm gesteuert wird, der die Position des Werkzeugs nur bedingt einhalten kann, so dass die Position des Schlittens bzw. der Schlitten an sich als Kontroll- und Korrekturelement verwendet wird.

Zur mechanischen Kopplung des Rührstiftes mit dem Schlitten zu Beginn des Schweißprozesses sieht ein Ausführungsbeispiel vor, eine Durchgangsbohrung in die Fügezone einzubringen, durch die dann der Rührstift mit seinem Abschnitt in den Schlitten eingeführt wird.

Eine erfindungsgemäße Vorrichtung zum Verbinden von zwei Bauteilen durch Rührreibschweißen hat ein Werkzeug, das eine Schulterfläche zum Beaufschlagen der Bauteile mit einer Prozesskraft im Bereich einer Fügezone und einen rotierbaren Rührstift zum Verrühren von plastifiziertem Material oder zum Plastifizieren und Verrühren der Bauteile im Bereich der Fügezone aufweist. Erfindungsgemäß weist die Vorrichtung einen Schlitten zur abschnittsweisen verschiebbaren Aufnahme des Rührstiftes und zum Abstützen der Bauteile auf, der entlang der Fügezone an einer von dem Werkzeug abgewandten Seite der Bauteile verfahrbar geführt ist. Eine derartige Vorrichtung erlaubt die Durchführung des vorbeschriebenen erfindungsgemäßen Verfahrens sowohl in Stumpfstoß als auch Überlappanordnung der Bauteile, so dass das plastifizierte Material stets ausreichend verrührt und somit Schweißnähte auch großflächiger Bauteile mit hoher Qualität reproduzierbar verlässlich herstellbar sind.

Bei einem Ausführungsbeispiel weist der Schlitten eine Bohrung zur Aufnahme eines Kopfabschnitts des Rührstiftes auf. Diese kann schnell in den Schlitten eingebracht werden und stellt eine sichere mechanische Führung bei einer Bewegung des Schlittens in Schweißrichtung bzw. in Längsrichtung der Fügezone über den Rührstift dar. Bei einem Ausführungsbeispiel ist der Kopfabschnitt des Rührstiftes zylindrisch ausgeführt. Hierdurch neigt der in dem Schlitten aufgenommene Kopfabschnitt nicht zum Verkanten und leichte Verschiebungen des Schlittens bzw. des Werkzeugs in Richtung der Längsachse und der Querachse der Fügezone bzw. des Kanals können ausgeglichen werden.

Um zu verhindern, dass der Rührstift beim Verschweißen in Querrichtung der Schweißrichtung versetzt wird bzw. auswandert, ist es vorteilhaft, wenn ein Kanal zur Aufnahme des Schlittens vorgesehen ist, der sich in Längsrichtung der Fügezone erstreckt und dessen Tiefe einer maximalen Höhe des Schlittens etwa entspricht, so dass der Schlitten bündig bzw. nahezu bündig mit einer Auflagefläche einer Auflage zum Ablegen der Bauteile abschließt. Bei der Höhe des Schlittens ist selbstverständlich die Art und Weise seiner Lagerung, zum Beispiel auf Gleitschienen oder Wälzkörpern, mit zu berücksichtigen.

Die erfindungsgemäße Vorrichtung ist äußerst robust, wenn der Schlitten in dem Kanal auf einer Gleitlagerung geführt ist. Dabei kann zumindest eine den Bauteilen zugewandte Stützfläche und/oder eine dem Kanal zugewandte Bodenfläche des Schlittens mit einer Beschichtung zur Reduzierung des Reibwiderstandes versehen sein.

Bei einem anderen Ausführungsbeispiel ist zwischen dem Schlitten und dem Kanal eine Wälzlagerung ausgebildet, wodurch der Reibwert weiter gesenkt wird.

Um auch Schweißarbeiten und insbesondere Positionierarbeiten der Bauteile und des Schlittens in einer Position durchführen zu können, in der das Werkzeug unterhalb der Bauteile und somit der Schlitten oberhalb der Bauteile positioniert ist, können die Lagerungen derart ausgebildet sein, dass eine Bewegung des Schlittens zumindest in dem Bereich, in dem die zu verschweißenden Bauteile positioniert sind, in Richtung der Hochachse des Kanals gesperrt ist. Selbstverständlich ist es vorstellbar, den Schlitten über eine Bewegung in Richtung der Hochachse in den Kanal einzusetzen bzw. aus diesem zu entnehmen, der dann beispielsweise über eine Längsbewegung in dem Kanal gesichert bzw. entsichert wird.

Zum Verfahren des Schlittens in dem Kanal kann ein separater Antrieb vorgesehen sein, der sowohl eine alleinige Bewegung des Schlittens als auch eine unterstützende Funktion für den den Schlitten schiebenden Rührstift darstellt.

Die Stützfläche des Schlittens kann beliebige Geometrien aufweisen. Insbesondere richtet sich die Geometrie nach dem Verlauf der Fügezone. Beispielsweise wird es bevorzugt, wenn die Stützfläche des Schlittens zum Verschweißen von bogenartigen Bauteilen in Schweißrichtung entsprechend bogenartig ausgebildet. D.h., beim Führen des Werkzeugs entlang einem konkaven Bauteilabschnitt ist zumindest die Stützfläche entsprechend konkav ausgebildet. Beim Führen des Werkzeugs entlang einem konvexen Bauteilabschnitt ist zumindest die Stützfläche entsprechend konvex ausgebildet. Zusätzlich kann die zur Stützfläche entgegengesetzte Bodenfläche des Schlittens entsprechend konkav bzw. konvex ausgebildet sein, was insofern vorteilhaft ist, als dass beim Verschweißen bogenförmiger Bauteile bzw. Bauteilabschnitte der Kanal ebenfalls bogenförmig verläuft.

Bei einem anderen Ausführungsbeispiel hat der Schlitten einen keilartigen Nasenbereich, so dass verhindert wird, dass die Bewegung des Schlittens durch einen in den Kanal ragenden unvorhergesehenen Materialvorsprung der Bauteile blockiert wird, was zu einer Beschädigung des Rührstiftes führen könnte.

Sonstige vorteilhafte Ausführungsbeispiele der vorliegenden Erfindung sind Gegenstand weiterer Unteransprüche.

Im Folgenden werden bevorzugte Ausführungsbeispiele der Erfindung anhand schematischer Darstellungen näher erläutert. Es zeigen:
Fig. 1a und 1b einen Schnitt durch ein erstes Ausführungsbeispiel einer erfindungsgemäßen Vorrichtung beim Verbinden zweier Bauteile im Stumpfstoß,
Fig. 2 ein erfindungsgemäßes Werkzeug der Vorrichtung aus Figur 1,
Fig. 3 einen Schnitt durch ein zweites Ausführungsbeispiel der erfindungsgemäßen Vorrichtung,
Fig. 4, 5a, 5b, 6, 7a, 7b, 8 Varianten eines erfindungsgemäßen Schlittens der Vorrichtung,
Fig. 9 und 10 Varianten eines erfindungsgemäßen Kanals der Vorrichtung,
Fig. 11, 12 und 13 erfindungsgemäße Gleitlagerungen des Rührstiftes in einem Schlitten der Vorrichtung,
Fig. 14a und 14b einen Schnitt durch eine erfindungsgemäße Gleitlagerung des Schlittens in einem Kanal,
Fig. 15 eine Phantomdarstellung einer alternative Gleitlagerung des Schlittens,
Fig. 16 einen Schnitt durch eine weitere alternative Gleitlagerung des Schlittens,
Fig. 17a und 17b Schnitte durch eine erfindungsgemäße Wälzlagerung des Schlittens, und
Fig. 18 eine Verwendung des erfindungsgemäßen Ausführungsbeispiels zu Herstellung einer Überlappverbindung.

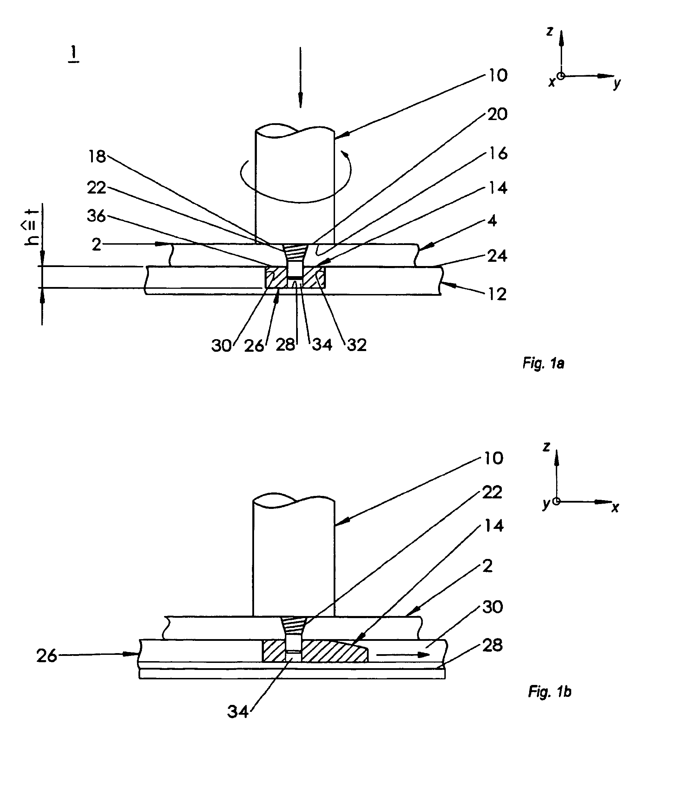

Figur 1 zeigt ein erstes Ausführungsbeispiel einer erfindungsgemäßen Vorrichtung 1 zum Rührreibschweißen von zwei Bauteilen 2, 4, die mit gegenüberliegenden Randbereichen 6, 8, im Stumpfstoß zueinander positioniert sind und hierdurch eine Fügezone definieren. Die Bauteils 2, 4 bestehen vorzugsweise aus einer Leichtmetalllegierung, beispielsweise aus einer Aluminiumlegierung, Magnesiumlegierung oder Titanlegierung, und sind beispielsweise bogenförmige Schalenelemente eines Flugzeugrumpfes, die in Längs- und Umfangsrichtung mit benachbarten Schalenelementen zu verschweißen sind. Gemäß der Darstellung in Figur 1 hat die Vorrichtung 1 ein Werkzeug 10, eine Auflage 12 sowie einen Schlitten 14. Allerdings können die Bauteile 2, 4 auch aus einer Stahllegierung bestehen.

Das Werkzeug 10 rotiert um seine Längsachse z bzw. die Hochachse der Fügezone und hat eine Schulterfläche 16 zum Plastifizieren der Bauteile 2, 4 im Bereich der Fügezone, die sich in Anlage mit jeweils einer gegenüberliegenden Randfläche 18, 20 der Bauteile 2, 4 befindet. Darüber hinaus hat das Werkzeug 12 einen Rührstift 22 zum Verrühren des plastifizierten Materials, der sich mittig von der Schulterfläche 16 erstreckt und in den Stumpfstoß zwischen die Bauteile 2, 4 eintaucht.

Die Auflage 12 hat eine Auflagefläche 24 zum Ablegen der Bauteile 2, 4, in der ein Kanal 26 eingebracht ist. Der Kanal 26 erstreckt sich in Schweißrichtung bzw. Längsrichtung x der Fügezone und hat beispielsweise einen rechteckigen Querschnitt mit einer Bodenwandung 28 und zwei gegenüberliegenden Seitenwandungen 30, 32.

Der Schlitten 14 ist ein in dem Kanal 26 in Längsrichtung x verfahrbarer Gegenhalter, an dem die Bauteile 2, 4 im Bereich der Fügezone abgestützt sind. Der Schlitten 14 hat eine ihn in z-Richtung durchsetzende Bohrung 34 zur abschnittweisen losen bzw. verschiebbaren Aufnahme des Rührstiftes 22 in z-Richtung. Die maximale Höhe h des Schlittens 14 einschließlich seiner Lagerung entspricht im Wesentlichen der maximalen Tiefe t des Kanals 26, so dass eine Stützfläche 36 des Schlittens 14 zur Abstützung der Bauteile 2, 4 im Fügezonenbereich bündig mit der Auflagefläche 24 der Auflage 12 abschließt. Der Schlitten 14 wird bei einer Bewegung in x-Richtung des Werkzeugs 10 über den Wirkeingriff mit dem Rührstift 22 mitgenommen, kann jedoch auch über einen eigenen Antrieb zum Verfahren in x-Richtung verfügen.

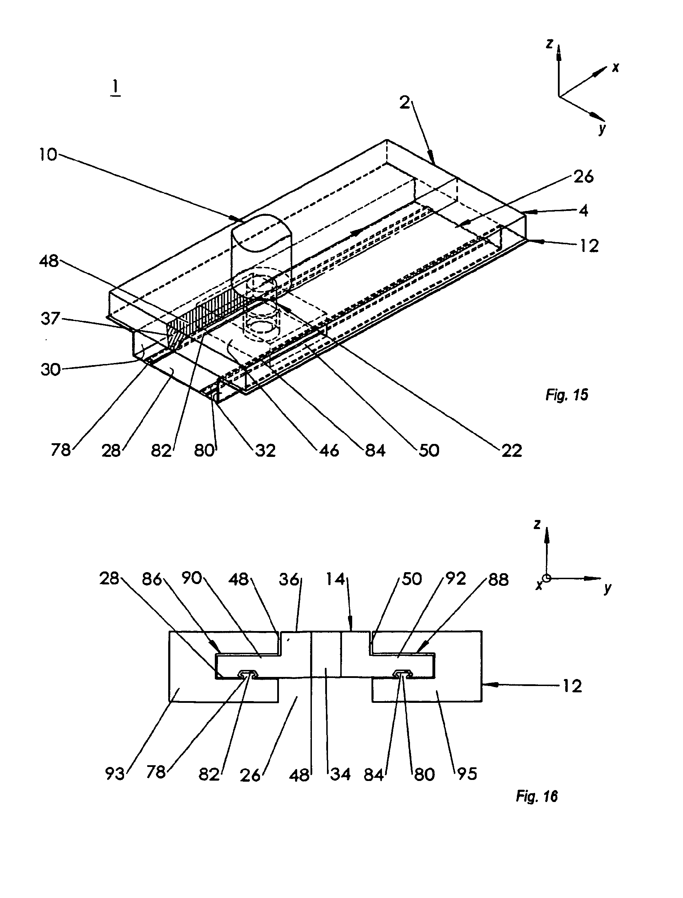

Zum Verschweißen der Bauteile 2, 4 werden diese mit ihren Randbereichen 6, 8 oberhalb des Kanals 26 auf der Auflage 12 abgelegt und entsprechend eingespannt. Dann wird im Startbereich des Stumpfstoßes eine nicht gezeigte Durchgangsbohrung zum Durchführen des Rührstiftes 22 eingebracht. Der Schlitten 14 wird mit seiner Bohrung 34 unterhalb der Durchgangsbohrung im Bereich der Fügezone fluchtend positioniert und der Rührstift 22 über ein Absetzen des Werkzeugs 10 auf den Bauteilen 2, 4 in die Bohrung 34 des Schlittens 14 eingeführt. Nun wird das Werkzeug 10 mit einer in Richtung der Bauteile 2, 4 weisenden Prozesskraft beaufschlagt und in Rotation versetzt, so dass zwischen der rotierenden Schulterfläche 16 und den Randflächen 18, 20 derart viel Wärme entsteht, dass die Randbereiche 6, 8 der Bauteile 2, 4 im Bereich der Schulterfläche 16 plastifiziert werden. Das plastifizierte Material wird über den Rührstift 22 verrührt und das Werkzeug 10 kontinuierlich in x-Richtung entlang des Stumpfstoßes bewegt bis eine in Figur 15 gezeigte Schweißnaht 37 ausgebildet ist und die Bauteile 2, 4 somit fest miteinander verbunden sind. Die Randbereiche 6, 8 stützen sich bei der transversalen Druck- bzw. Kraftbeaufschlagung des Werkzeugs 10 auf der Stützfläche 36 des Schlittens 14 ab, so dass diese zwischen der Schulterfläche 16 des Werkzeugs 10 und der Stützfläche 36 des Schlittens 14 eingespannt sind. Der rotierende Rührstift 22 taucht ständig abschnittsweise in die Schlittenbohrung 34 ein und durchsetzt somit den Stumpfstoß bzw. das plastifizierte Material in z-Richtung. Durch den ständigen Wirkeingriff des Rührstiftes 22 in die Schlittenbohrung 34 führt das Werkzeug 10 den Schlitten 14 bei einer Bewegung in x-Richtung mit. Da der Schlitten 14 nicht an dem Rührstift 22 fixiert ist und sich nicht in einem festen Abstand zur Schulterfläche 16 befindet, sondern das Werkzeug 10 relativ verschiebbar zum Schlitten 14 in z-Richtung gelagert ist, kann die Eindringtiefe des Rührstiftes 22 in die Schlittenbohrung 34 variieren, so dass beispielsweise Dickenveränderungen der Bauteile 2, 4 selbsttätig ohne eine aufwendige Verstellung der Position des Rührstifts 22 in z-Richtung ausgeglichen werden. Demgemäß wird die Vorrichtung 1 vorrangig kraftorientiert mit einer konstanten Prozesskraft betrieben.

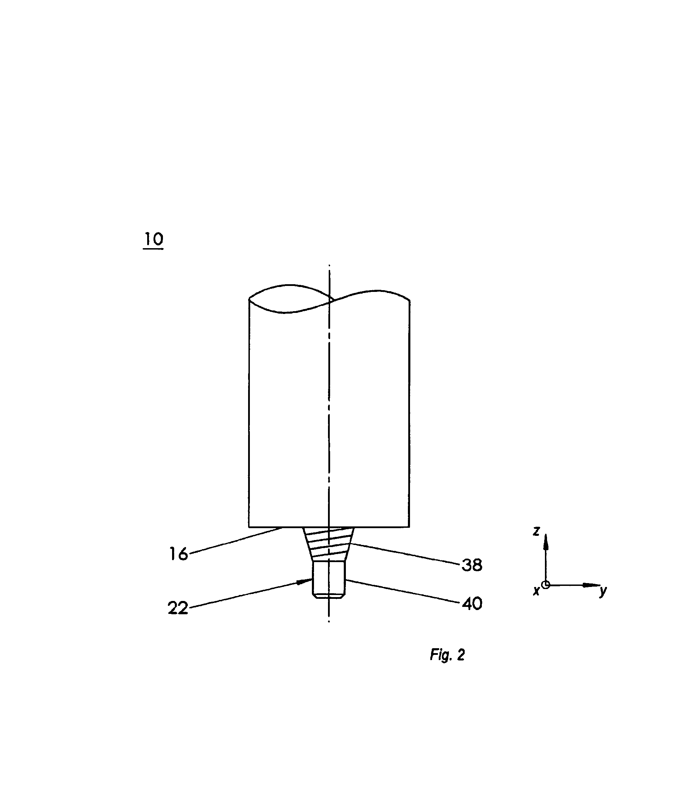

Gemäß Fig. 2 ist das Werkzeug 10 als ein Zylinder ausgebildet, an dem stirnseitig die Schulterfläche 16 ausgebildet ist. Der Rührstift 22, der fest mit dem Werkzeug 10 verbunden ist, erstreckt sich mittig von der somit ringartigen Schulterfläche 16 und weist einen fußseitigen konusartigen Gewindeabschnitt 38 und einen zylinderförmigen Kopfabschnitt 40 auf.

Der Gewindeabschnitt 38 dient zum Vermischen des plastifizierten Materials und ist in Richtung des Kopfabschnitts 40 radial verjüngt. Zumindest die axiale Länge bzw. Erstreckung des Gewindeabschnitts 38 in z-Richtung bzw. entlang der Rotationsachse des Werkzeugs 10 ist in Abhängigkeit der Materialdicken der zu verschweißenden Bauteil 2, 4 gewählt. Weitere einstellbare Parameter sind zum Beispiel die Gewindesteigung und der Konuswinkel.

Der Kopfabschnitt 40 dient zur Herstellung der mechanischen Kopplung zwischen dem Werkzeug 10 und dem Schlitten 14 in x-Richtung. Er ist in z-Richtung verschiebbar in der Schlittenbohrung 34 geführt. Sein Durchmesser ist so gewählt, dass er quasi über eine Spielpassung in der Bohrung 34 aufgenommen ist. Seine Erstreckung in z-Richtung ist in Abhängigkeit der Materialdicken der zu verschweißenden Bauteil 2, 4 so gewählt, dass er stets in die Bohrung 34 eintaucht. Sein Durchmesser richtet sich vornehmlich nach dem zu verschweißenden Material und der Dicke der zu verschweißenden Bauteile 2, 4.

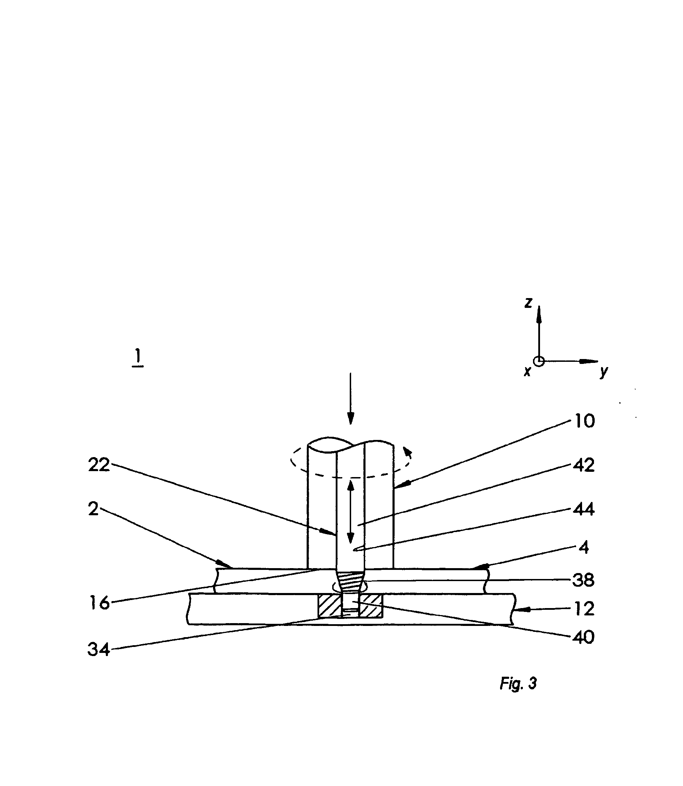

Figur 3 zeigt ein Ausführungsbeispiel der erfindungsgemäßen Vorrichtung 1, bei der im Unterschied zu den Figuren 1 bis 2 der Rührstift 22 axial verschiebbar in dem Werkzeug 10 geführt und getrennt von der Schulterfläche 16 und somit alleine rotierbar ist, was durch den gestrichelten Pfeil bzgl. der Schulterfläche 16 und des durchgezogenen Pfeils bzgl. des Rührstiftes 22 verdeutlicht ist. Der Rührstift 22 weist einen Führungsabschnitt 42 auf, der in einer Axialbohrung 44 des Werkzeugs 10 über einen nicht gezeigten Stellantrieb in z-Richtung ein- und ausgefahren werden kann. Der Gewindeabschnitt 38 sowie der Kopfabschnitt 40 sind bei dieser Variante in unterschiedlichen Abständen zur Schulterfläche 16 positionierbar, so dass diese Vorrichtung 1 im Gegensatz zur vorbeschriebenen Vorrichtung nach den Figuren 1a und 1b mit dem Werkzeug 10 nach Figur 2 bei nahezu beliebig dicken Bauteilen 2, 4 eingesetzt werden kann. Insbesondere eignet sich diese Vorrichtung 1 zum Verschweißen von Bauteilen 2, 4 mit großen Dickenveränderungen im Bereich der Fügezone, da die wahlweise rotierende oder nicht rotierende Schulterfläche 16 bzw. der die Schulterfläche 16 ausbildende wahlweise rotierende bzw. nicht rotierende Zylinder kraftkontrolliert und der Rührstift 22 positionskontrolliert betrieben werden kann. D.h., die Schulterfläche 16 wird mit einer konstanten Kraft gegen die Bauteile 2, 4 gedrückt und der Rührstift 22 wird über eine dem Werkzeug 10 in Schweißrichtung vorgelagerte Tasteinrichtung ein- bzw. ausgefahren.

Wenn die Schulterfläche 16 nicht rotierend ausgebildet ist, dient der sich drehende Rührstift 22 ebenfalls zur Plastifizierung der Bauteile 2, 4, im Bereich der Fügezone. Wenn sowohl die Schulterfläche 16 als auch der Rührstift 22 in Rotation versetzt werden, können der Zylinder bzw. die Schulterfläche 16 und der Rührstift 22 gleiche oder unterschiedliche Drehzahlen aufweisen. Ob die Schulterfläche 16 ebenfalls in Rotation versetzt wird, richtet sich insbesondere nach Prozessparametern wie Bauteildicke und Bauteilmaterial.

Gemäß den Darstellungen 4 bis 8 kann der Schlitten 14 eine Vielzahl von Geometrien aufweisen, von denen im Folgenden einige beispielhaft gezeigt sind. Die Schlittenbohrung 34 ist bei sämtlichen Ausführungsbeispielen in einem mittleren Bereich angeordnet und vorzugsweise eine Durchgangsbohrung. Ein bevorzugtes Schlittenmaterial ist ein handelsüblicher Werkzeugstahl.

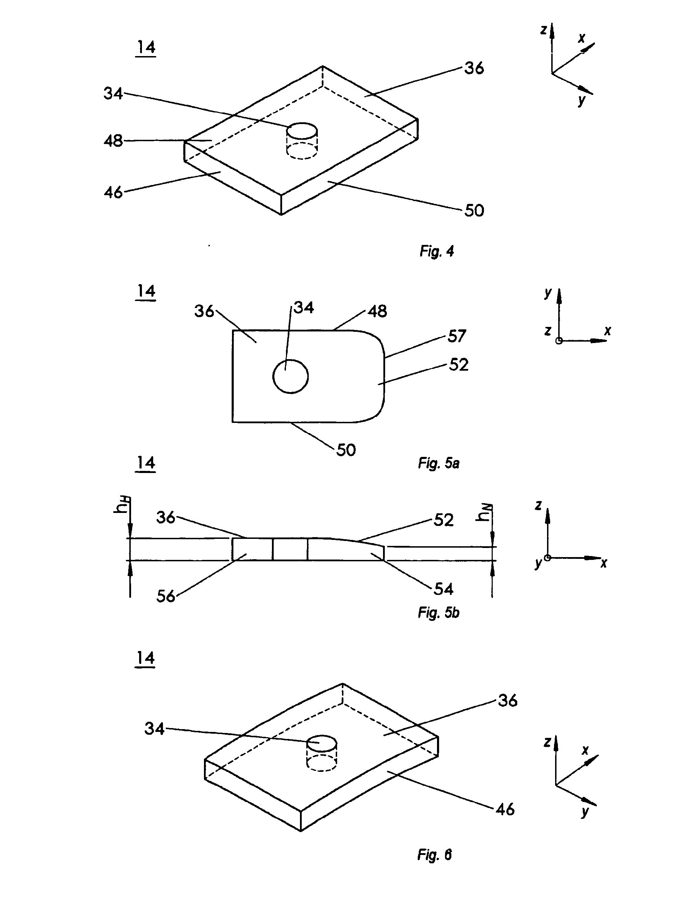

Bei dem in Fig. 4 gezeigten Ausführungsbeispiel hat der Schlitten 14 einen rechteckigen Querschnitt mit einer ebenen Stützfläche 36, einer zu dieser entgegengesetzten Bodenfläche 46 sowie zwei sich in x-Richtung erstreckende Seitenflächen 48, 50. Die Stützfläche 36 und die Bodenfläche 46 sowie die Seitenflächen 48, 50 verlaufen jeweils parallel zueinander.

Bei dem in den Figuren 5a und 5b gezeigten Ausführungsbeispiel eines Schlittens 14 geht die Stützfläche 36 in Schweißrichtung x in eine Keilfläche 52 über, wodurch der Schlitten 14 einen Nasenbereich 54 mit einer Höhe H_{N} aufweist, die kleiner ist als eine Höhe H_{H} seines rückwärtigen Heckbereichs 56. Der Nasenbereich 54 hat eine Stirnfläche 57, deren Übergangsbereiche zu den Seitenflächen 48, 50 abgerundet ausgebildet sind. Durch die Keilform und durch die Abrundungen des Nasenbereichs 54 wird ein Blockieren des Schlittens 14 durch Materialvorsprünge der Bauteile 2, 4, die unvorhergesehener Weise in den Kanal 26 weisen, verhindert.

Gemäß dem in Figur 6 gezeigten Ausführungsbeispiel können die Stützfläche 36 und die Bodenfläche 46 in Schweißrichtung x bogenartig ausgebildet sein, wodurch sich dieses Ausführungsbeispiel insbesondere zum Verschweißen von bogenartigen Bauteilen 2, 4 eignet.

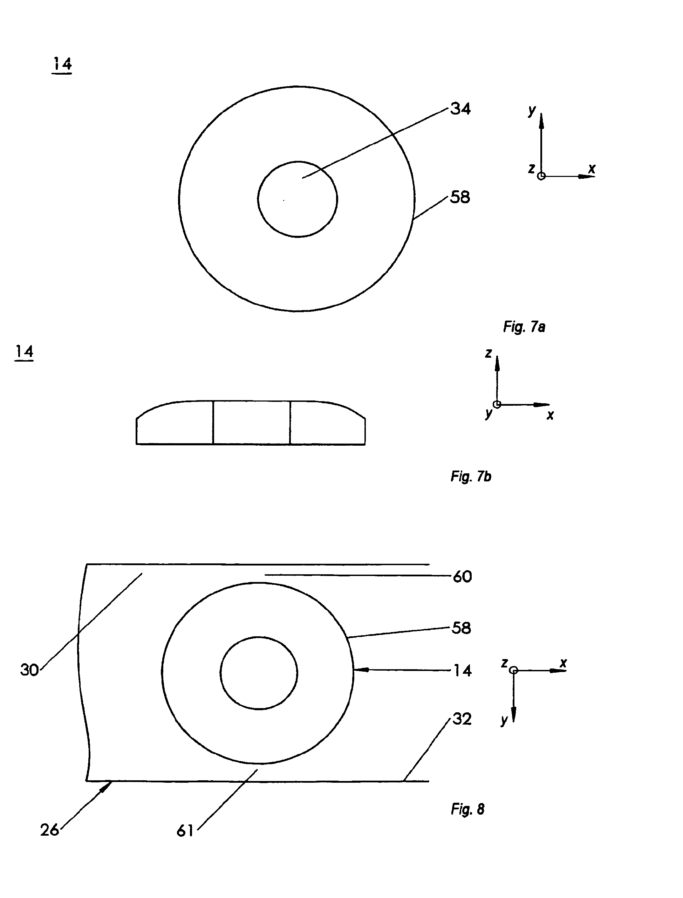

Gemäß dem Ausführungsbeispiel nach den Figuren 7a und 7b kann der Schlitten 14 ebenfalls als ein Ringkörper mit einem kreisförmigen Querschnitt und einer zylinderförmigen Außenumfangswandung 58 ausgebildet sein.

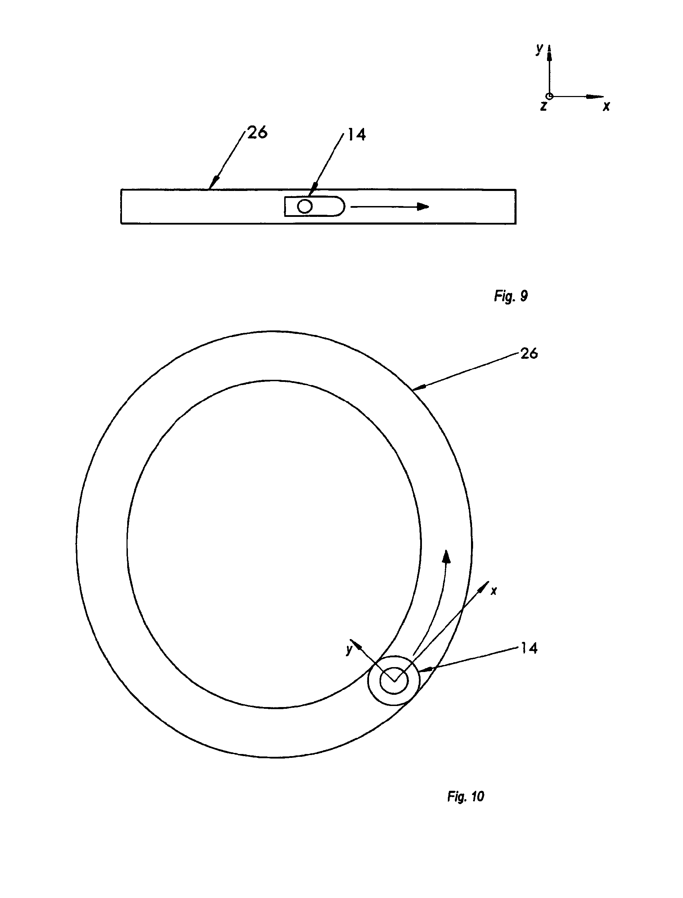

Um ein Klemmen des Schlittens 14 bei einer Bewegung in x-Richtung innerhalb des Kanals 26 zu verhindern, kann es vorteilhaft sein, wenn, wie beispielhaft an dem ringartigen Schlitten 14 in Fig. 9 gezeigt, zwischen der Außenumfangswandung 58 und den gegenüberliegenden Seitenwandungen 30, 32 des Kanals 26 jeweils ein Spalt 60, 61 ausgebildet ist.

Die Geometrie des Schlittens 14 bzw. die Schlittenwahl richtet sich insbesondere nach der Geometrie der miteinander zu verschweißenden Bauteile 2, 4 im Bereich der Fügezone. So wird beispielsweise wie in Figur 9 gezeigt zum Führen eines Schlittens 14 entlang eines geradlinigen Kanals 26 zur Bilden einer geradlinigen Schweißnaht ein in den Figuren 5a und 5b gezeigter keilförmiger Schlitten 14 mit einem abgerundeten Nasenbereich 54 bevorzugt. Zum Führen eines Schlittens 14 entlang eines gebogenen Kanals 26 zur Bildung ringförmiger Schweißnähte, beispielsweise zum Verschweißen von Flugzeugfensterrahmen mit rumpfseitigen Fensterausschnitten, wird wie in Fig. 10 gezeigt, ein in den Figuren 7a und 7b gezeigter ringförmiger Schlitten 14 bevorzugt.

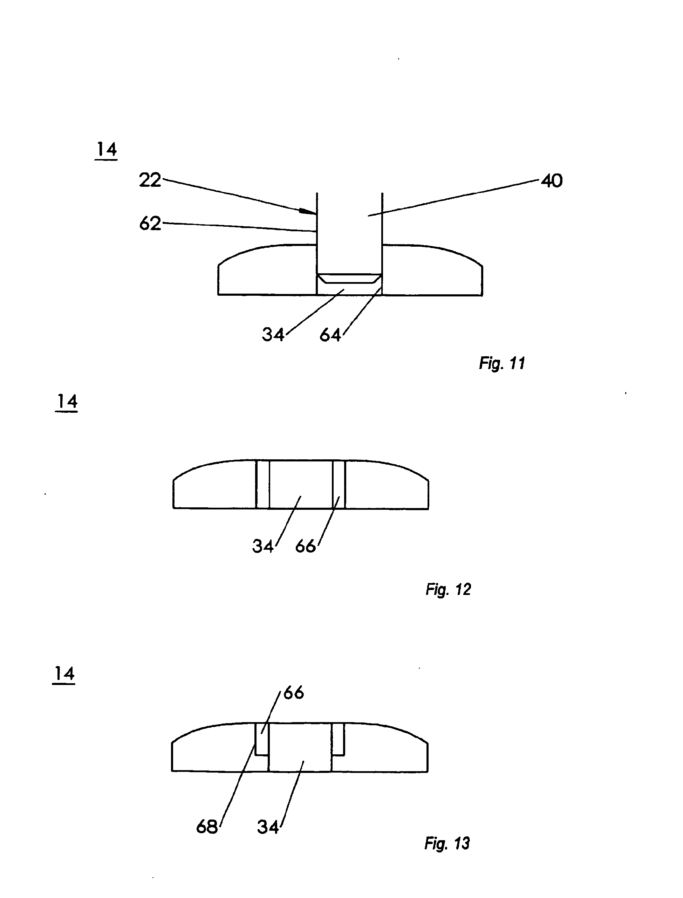

Der Kopfabschnitt 40 des Rührstifts 22 ist, wie beispielhaft in den Figuren 11, 12 und 13 gezeigt, über eine Gleitlagerung in der Bohrung 34 geführt.

So zeigt Fig. 11 ein Ausführungsbeispiel, bei dem sich der Kopfabschnitt 40 unmittelbar mit einem Abschnitt seiner Außenwandung 62 in Gleitkontakt mit einem gegenüberliegenden Abschnitt der Innenwandung 64 der Bohrung 34 befindet.

In Fig. 12 ist ein Ausführungsbeispiel gezeigt, bei dem in die Bohrung 34 eine Gleitbuchse 66 zur Verringerung des Reibwiderstandes eingesetzt ist. Die Gleitbuchse 66 kann sich über die gesamte axiale Länge der Bohrung 34 oder aber, wie in Fig. 13 gezeigt, nur über einen stützflächennahen Bereich 68 des Schlittens 14 erstrecken. Das Material der Gleitbuchse 66 wird optimal auf das Material des Kopfabschnittes 40 des Rührstiftes 22 abgestimmt und kann zusätzlich mit einer Beschichtung zur Verringerung des Reibwiderstandes versehen sein. Ein beispielhaftes Material für die Gleitbuchse ist Bronze. Sie kann jedoch aus einem Kunststoff oder aus einem anderen Metall bestehen, mittels dem der Reibwert reduziert werden kann.

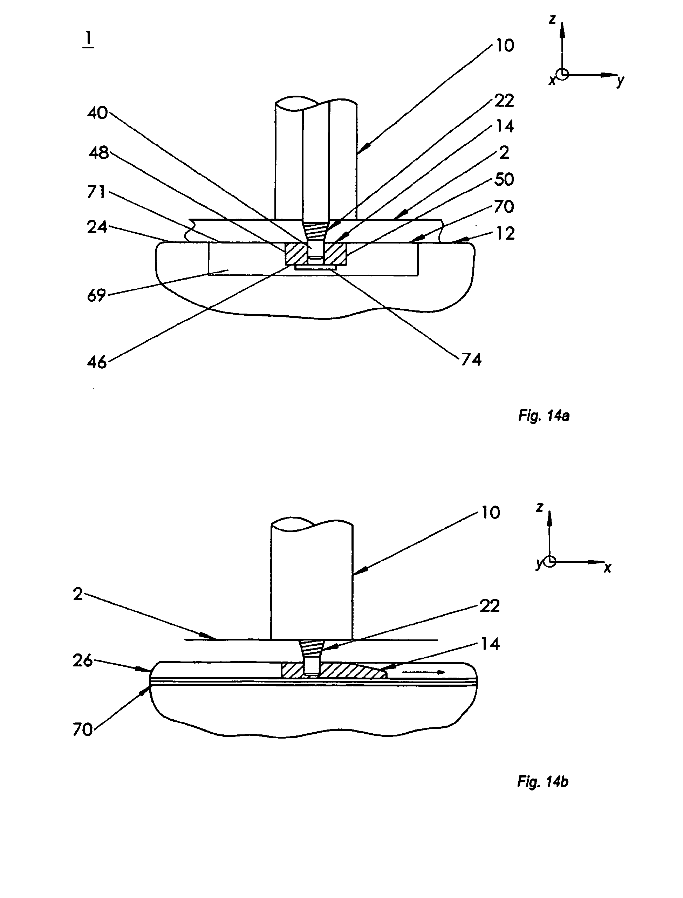

Der Schlitten 14 kann, wie in den Figuren 14a, 14b, 15 und 16 gezeigt, über eine Gleitlagerung in dem Kanal 26 geführt sein. Dabei wird es zur Reduzierung des Reibwiderstandes bei sämtlichen Ausführungsbeispielen bevorzugt, wenn der Schlitten 14 zumindest im Bereich seiner Außenflächen 36, 46, 48, 50 mit einer reibreduzierenden Beschichtung versehen ist.

Gemäß dem Ausführungsbeispiel nach den Figuren 14a und 14b ist in eine Ausnehmung 69 der Auflage 12 ein Gleiteinsatz 70, beispielsweise aus Bronze, eingesetzt, der den Kanal 26 für den Schlitten 14 definiert. Der Gleiteinsatz 70 hat eine Höhe h, die der Tiefe t der Ausnehmung 69 entspricht, so dass der Gleiteinsatz mit seiner Oberfläche 71 bündig mit der Auflagefläche 24 der Auflage 12 abschließt. Er umgreift den Schlitten 14 im Bereich seiner Bodenfläche 46 sowie Seitenflächen 48, 50 und weist bodenseitig eine Längsvertiefung 74 zur Vergrößerung eines Abstandes zwischen dem Kopfabschnitt 40 des Rührstiftes 22 und einer Grundfläche 76 des Kanals 26 auf.

In Fig. 15 ist eine Gleitlagerung des Schlittens 14 in dem Kanal 26 dargestellt, bei der der Schlitten 14 auf zwei parallelen im Bereich der Kanalbodenwandung 28 sich in x-Richtung erstreckenden Gleitschienen 78, 80 gelagert ist. Zur Führung bzw. Lagerung des Schlittens 14 auf den Gleitschienen 78, 80 weist dieser zwei bodenseitige Längsnuten 82, 84 auf, die derart ausgebildet sind, dass der Schlitten 14 mit seiner Bodenfläche 46 sowie mit seinen Seitenflächen 48, 50 von der Bodenwandung 28 beabstandet ist. Zusätzlich ist der Schlitten 14 mit seinen Seitenflächen 48, 50 von den Seitenwandungen 30, 32 beabstandet, wodurch ein sehr niedriger Reibwert erzielt wird, da sich der Schlitten 14 mit dem Kanal 26 nur im Bereich der Längsnuten 82, 84 bzw. der Gleitschienen 78, 80 im Reibkontakt befindet. Um ein Herausfallen des Schlittens 14 bei Schweißarbeiten zu verhindern, bei denen das Werkzeug 10 unterhalb der Bauteile 2, 4 und somit unterhalb des Schlittens 14 positioniert ist, beispielswiese bei Überkopfarbeiten, bilden die Gleitschienen 78, 80 mit den Längsnuten 82, 84 vorzugsweise jeweils eine in z-Richtung selbstsichernde Schwalbenschwanzführung.

Gemäß der Darstellung in Fig. 16 sind bei einem Ausführungsbeispiel die Gleitschienen 78, 80 in sich in Längsrichtung erstreckenden seitlichen Tunneln 86, 88 des Kanals 26 angeordnet. Hierdurch wird der Abstand der Gleitschienen 78, 80 zueinander vergrößert, was grundsätzlich eine ruhigere Führung des Schlittens 14 ermöglicht. Zur Ausbildung der entsprechenden Längsnuten 82, 84 weist der Schlitten 14 an seinen Seitenflächen 48, 50 jeweils einen sich in Längsrichtung erstreckenden Vorsprung 90, 92 auf, so dass diese ausgehend von der Stützfläche 36 in Richtung der Bodenfläche 46 stufenförmig erweitert sind. Zusätzlich ist der Kanal 26 zwischen den Gleitschienen 78, 80 im Bereich seiner Bodenwandung 28 geöffnet, wodurch die Auflage 12 quasi zweiteilig mit zwei voneinander beabstandeten Auflageteilen 93, 95 ausgeführt ist und der Abstand zwischen den Gleitschienen 78, 80 in Querrichtung y flexibel eingestellt werden kann, was die optimale Anpassung der Schlittenbreite auf die zu verschweißenden Bauteile 2, 4 ermöglicht.

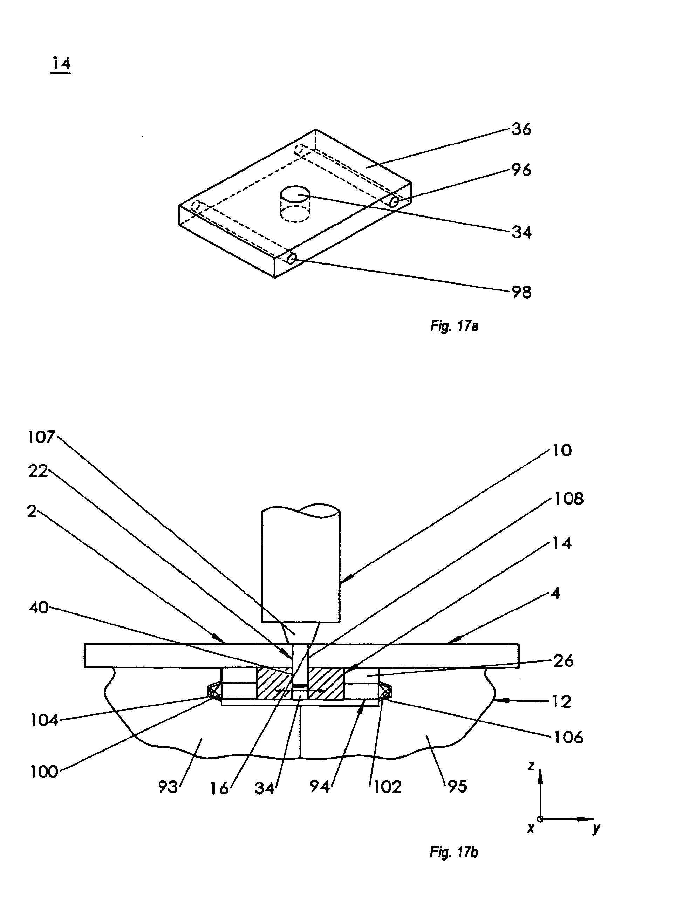

In den Fig. 17a und 17b ist eine Wälzlagerung eines rechteckigen Schlittens 14 in dem Kanal 26 dargestellt, die ebenfalls ein Herausfallen des Schlittens 14 aus dem Kanal 26 verhindert. Der Schlitten 14 ist auf zwei parallel nebeneinander angeordneten Rollen 94 geführt, die in jeweils einer den Schlitten 14 in y-Richtung durchsetzenden Lagerbohrung 96, 98 geführt sind und mit ihren Endabschnitten 100, 102 in jeweils einer in die Seitenwandungen 30, 32 eingebrachten Längsvertiefung geführt sind. Die Endabschnitte 100, 102 sind vorzugsweise konisch verjüngt und die Längsversenkungen 104, 106 entsprechend mit einem etwa trapezartigen Querschnitt versehen. Im auf der Auflage 12 aufgespannten Zustand der Bauteile 2, 4 liegen diese auf der Stützfläche 36 des Schlittens 14 auf, der sich über die Endabschnitte 100, 102 der Rollen 94 in dem Kanal 26 und somit auf der Auflage 12 abstützt. Der Schlitten 14 ist mit seiner Bodenfläche 46 sowie mit seinen Seitenflächen 48, 50 von den gegenüberliegenden Wandungen 28, 30, 32 des Kanals 26 beabstandet. Der Schlitten 14 ist in Querrichtung y des Kanals 26 verschiebbar auf den Rollen 94 geführt, so dass Fehlpositionierungen der Bauteile 2, 4 beim Einspannen bzw. beim Ablegen auf der Auflage 12 in gewissen Toleranzgrenzen ausgeglichen werden können.

Darüber hinaus ist bei diesem Ausführungsbeispiel die Schulterfläche 16 stirnseitig eines konisch verjüngten Zylinderabschnitts 107 gebildet. Der konische Abschnitt 107 geht in einen zylindrischen Körperabschnitt 108 über, der in den Stumpfstoß eintaucht und endseitig den Kopfabschnitt 40 aufweist. Somit weist dieses Ausführungsbeispiel keinen konischen Gewindeabschnitt 38 auf. Der zylindrische Körperabschnitt 108 und der Kopfabschnitt 40 weisen einen einheitlichen Außendurchmesser auf.

Ferner ist die Auflage 12 zweiteilig ausgeführt, wobei ihr beiden Auflageteile 93, 95 im Bereich des Kanals 26 über einen Stumpfstoß zusammengeführt sind. Hierdurch wird insbesondere das Einsetzen bzw. die Entnahme des Schlittens 14 in bzw. aus dem Kanal 26 erleichtert.

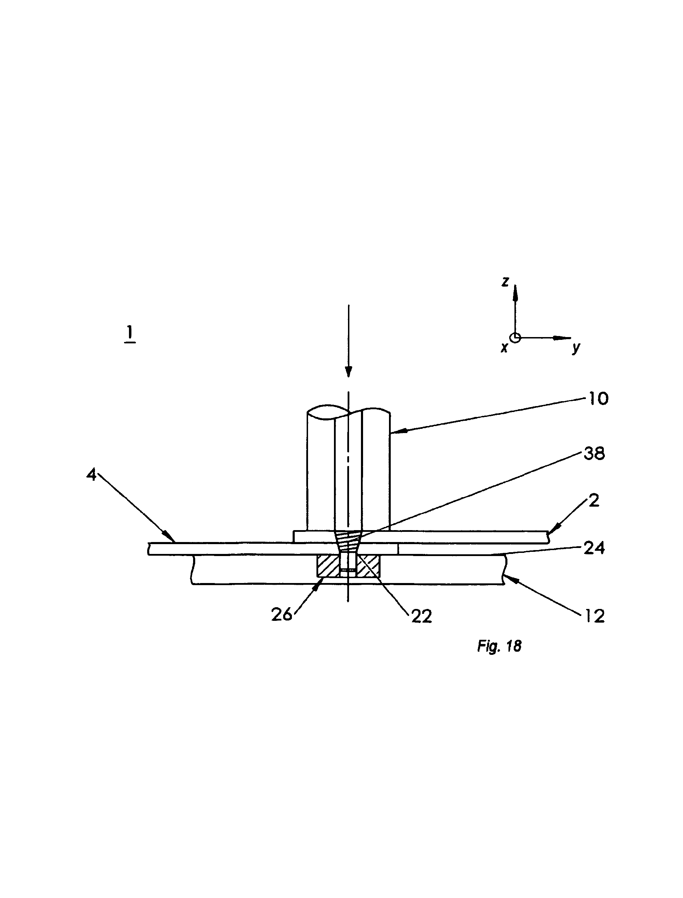

Figur 18 zeigt eine Anwendung der erfindungsgemäßen Vorrichtung 1 zum Verschweißen von zwei Bauteilen 2, 4, die sich in Überlappung befinden. Das gemäß der Darstellung untere Bauteil 4 stützt sich im Bereich der Fügezone auf dem Schlitten 26 ab. Das obere Bauteil 2 liegt im Bereich der Fügezone auf dem unteren Bauteil 4 auf und wird über die Schulterfläche 16 mit einer Prozesskraft beaufschlagt. Der Rührstift 22 durchsetzt beide Bauteile 2, 4 und ist entsprechend der sich kumulierenden Bauteildicken in z-Richtung im Vergleich zu den vorbeschriebenen Ausführungsbeispielen mit einem axial verlängerten Gewindeabschnitt 38 ausgebildet.

Offenbart ist ein Verfahren zum Rührreibschweißen von zwei Bauteilen, mit einem rotierenden Werkzeug, das eine rotierende oder nicht rotierende Schulterfläche zum Beaufschlagen der Bauteile mit einer Prozesskraft im Bereich einer Fügezone und einen rotierenden Rührstift zum Verrühren von plastifiziertem Material oder zum Plastifizieren und Verrühren der Bauteile im Bereich der Fügezone aufweist, bei dem ein Rührstift mit einem Abschnitt in einen Schlitten verschiebbar eintaucht, auf dem die Bauteile abgestützt werden, der entlang der Fügezone an einer von dem Werkzeug abgewandten Seite der Bauteile geführt wird, so dass beim Schweißen eine selbsttätige Relativbewegung zwischen dem Rührstift und dem Schlitten bzw. der Schulterfläche des Werkzeugs und einer die Bauteile stützenden Stützfläche des Schlittens ermöglicht wird, sowie eine Vorrichtung zur Durchführung eines derartigen Verfahrens.

### Bezugszeichenliste

- 1: Vorrichtung
- 2: Bauteil
- 4: Bauteil
- 6: Randbereich
- 8: Randbereich
- 10: Werkzeug
- 12: Auflage
- 14: Schlitten
- 16: Schulterfläche
- 18: Randfläche
- 20: Randfläche
- 22: Rührstift
- 24: Auflagefläche
- 26: Kanal
- 28: Bodenwandung
- 30: Seitenwandung
- 32: Seitenwandung
- 34: Bohrung
- 36: Stützfläche
- 37: Schweißnaht
- 38: Gewindeabschnitt
- 40: Kopfabschnitt
- 42: Führungsabschnitt
- 44: Axialbohrung
- 46: Bodenfläche
- 48: Seitenfläche
- 50: Seitenfläche
- 52: Keilfläche
- 54: Nasenbereich
- 56: Heckbereich
- 57: Stirnfläche
- 58: Außenumfangswandung
- 60: Spalt
- 61: Spalt
- 62: Außenwandung
- 64: Innenwandung
- 66: Gleitbuchse
- 68: Abschnitt
- 69: Ausnehmung
- 70: Gleiteinsatz
- 71: Oberfläche
- 72: Bodenfläche
- 74: Vertiefung
- 76: Grundfläche
- 78: Gleitschiene
- 80: Gleitschiene
- 82: Längsnut
- 84: Längsnut
- 86: Tunnel
- 88: Tunnel
- 90: Vorsprung
- 92: Vorsprung
- 93: Auflageteil
- 94: Rolle
- 95: Auflageteil
- 96: Lagerbohrung
- 98: Lagerbohrung
- 100: Endabschnitt
- 102: Endabschnitt
- 104: Längsversenkung
- 106: Längsversenkung
- 107: konischer Abschnitt
- 108: Körperabschnitt

## Patentansprüche

1. Verfahren zum Verbinden von zwei Bauteilen (2, 4) durch Rührreibschweißen, mit einem Werkzeug (10), das eine Schulterfläche (16) zum Beaufschlagen der Bauteile mit einer Prozesskraft (2, 4) im Bereich einer Fügezone und einen rotierenden Rührstift (22) zum Verrühren von plastifiziertem Material oder zum Plastifizieren und Verrühren der Bauteile (2, 4) im Bereich der Fügezone aufweist, wobei der Rührstift (22) in einen Schlitten (14) abschnittsweise eintaucht, auf dem die Bauteile (2, 4) abgestützt werden, der entlang der Fügezone an einer von dem Werkzeug (10) abgewandten Seite der Bauteile (2, 4) geführt wird, **dadurch gekennzeichnet, dass** der Rührstift (22) in den Schlitten (14) abschnittsweise verschiebbar eintaucht.

2. Verfahren nach Anspruch 1, wobei der Schlitten (14) über einen Wirkeingriff von dem Rührstift (22) mitgeführt wird.

3. Verfahren nach Anspruch 1 oder 2, wobei der Schlitten (14) über einen eigenen Antrieb zumindest unterstützend verfahren wird.

4. Verfahren nach Anspruch 1, 2 oder 3, wobei die Position des Werkzeugs (10) in der x-y-Ebene der Fügezone über die Position des Schlittens definiert wird.

5. Verfahren nach Anspruch einem der vorhergehenden Ansprüche, wobei zu Beginn des Schweißens eine Durchgangsbohrung in die Fügezone eingebracht wird zur Herstellung des Wirkeingriffs zwischen dem Rührstifts (22) und dem Schlitten (14).

6. Vorrichtung (1) zum Verbinden von zwei Bauteilen (2, 4) durch Rührreibschweißen, mit einem Werkzeug (10), das eine Schulterfläche (16) zum Beaufschlagen der Bauteile mit einer Prozesskraft (2, 4) im Bereich einer Fügezone und einen rotierbaren Rührstift (22) zum Verrühren von plastifiziertem Material oder zum Plastifizieren und Verrühren der Bauteile (2, 4) im Bereich der Fügezone aufweist, und mit einem Schlitten (14) zum Abstützen der Bauteile (2, 4), der entlang der Fügezone an einer von dem Werkzeug (10) abgewandten Seite der Bauteile (2, 4) verfahrbar geführt ist, **dadurch gekennzeichnet, dass** der Schlitten zur abschnittsweisen verschiebbaren Aufnahme des Rührstifts (22) gestaltet ist.

7. Vorrichtung nach Anspruch 6, wobei der Schlitten (14) eine Bohrung (34) zur Aufnahme eines Kopfabschnitts (40) des Rührstifts (22) hat.

8. Vorrichtung nach Anspruch 6 oder 7, wobei ein Kanal (26) zur Aufnahme des Schlittens (14) vorgesehen ist, dessen Tiefe (t) in etwa I einer maximalen Höhe (h) des Schlittens (14) entspricht.

9. Vorrichtung nach Anspruch 8, wobei eine Gleitlagerung zwischen dem Schlitten (14) und dem Kanal (26) ausgebildet ist.

10. Vorrichtung nach Anspruch 8 oder 9, wobei zumindest eine den Bauteilen (2, 4) zugwandte Stützfläche (36) und/oder eine dem Kanal (26) zugewandte Bodenfläche (46) des Schlittens (14) mit einer Beschichtung zur Reduzierung des Reibwiderstandes versehen ist.

11. Vorrichtung nach Anspruch 8, wobei eine Wälzlagerung zwischen dem Schlitten (14) und dem Kanal (26) ausgebildet ist.

12. Vorrichtung nach Anspruch 9, 10 oder 11, wobei die Lagerungen eine Bewegung des Schlittens (14) in Richtung der Hochachse (z) der Fügezone sperren.

13. Vorrichtung nach einem der Ansprüche 6 bis 12, wobei ein Antrieb zum Verfahren des Schlittens (14) vorgesehen ist.

14. Vorrichtung nach einem der Ansprüche 6 bis 13, wobei die Stützfläche (36) des Schlittens (14) in Längsrichtung (x) der Fügezone (x) bogenartig ausgebildet ist.

15. Vorrichtung nach einem der Ansprüche 6 bis 14, wobei der Schlitten (14) einen keilartigen Nasenbereich (54) hat.

## Claims

1. A method for connecting two components (2, 4) by friction stir welding, with a tool (10) comprising a shoulder surface (16) for subjecting the components (2, 4) to a process force in the region of a joining zone and a rotating stirring pin (22) for stirring plasticized material or for plasticizing and stirring the components (2, 4) in the region of the joining zone,
wherein the stirring pin (22) plunges section-by-section in a slide (14) on which the components (2, 4) are supported, and which is guided along the joining zone on a side of the components (2, 4), which side faces away from the tool (10),
**characterized in that**
the stirring pin (22) slidably plunges section-by-section in the slide (14).

2. The method according to claim 1, wherein the slide (14) is guided along by the stirring pin (22) by way of active engagement.

3. The method according to claim 1 or 2, wherein the slide (14) is driven by way of its own drive, at least in a supporting manner.

4. The method according to claim 1, 2 or 3, wherein the position of the tool (10) in the x-y plane of the joining zone is defined by way of the position of the slide (14).

5. The method according to one of the preceding claims, wherein at the beginning of the welding process a through-hole is made in the joining zone in order to bring about the active engagement between the stirring pin (22) and the slide (14).

6. A device for connecting two components (2, 4) by friction stir welding with a tool (10) that comprises a shoulder surface (16) for subjecting the components (2, 4) to a process force in the region of a joining zone and a rotatable stirring pin (22) for stirring plasticized material or for plasticizing and stirring the components (2, 4) in the region of the joining zone, and with a slide (14) for supporting the components (2, 4), which slide (14) is movably guided along the joining zone on a side of the components (2, 4), which side faces away from the tool (10),
**characterized in that**
the slide (14) is formed for a section-by-section slidable reception of the stirring pin (22).

7. The device according to claim 6, wherein the slide (14) comprises a bore (34) for receiving a head section (40) of the stirring pin (22).

8. The device according to claim 6 or 7, wherein a channel (26) for receiving the slide (14) is provided whose depth (t) approximately corresponds to a maximum height (h) of the slide (14).

9. The device according to claim 8 wherein there is a plain bearing between the slide (14) and the channel (26).

10. The device according to claim 8 or 9, wherein a coating for reducing frictional resistance is provided on at least one of a bottom surface (46) of the slide (14), which bottom surface (46) faces the channel (26) and/or at least one supporting surface (36) facing the components (2, 4).

11. The device according to claim 8, wherein there is a roller bearing between the slide (14) and the channel (26).

12. The device according to claim 9, 10 or 11, wherein the plain bearing blocks movement of the slide (14) in the direction of the vertical axis (z) of the joining zone.

13. The device according to one of the claims 6 to 12, wherein a drive is provided for moving the slide (14).

14. The device according to one of the claims 6 to 13, wherein the supporting surface (36) of the slide (14) in the longitudinal direction (x) of the joining zone is curved.

15. The device according to one of the claims 6 to 14, wherein the slide (14) has a wedge-like nose region (54).

## Revendications

1. Procédé d'assemblage de deux éléments constitutifs (2, 4) par soudage par friction-malaxage, comportant un outil (10) qui présente une surface d'épaulement (16) pour solliciter les éléments constitutifs avec une force de traitement (2, 4) au niveau d'une zone de joint et une baguette agitatrice (22) pivotante pour malaxer un matériau plastifié ou pour plastifier et malaxer les éléments constitutifs (2, 4) au niveau de la zone de joint, dans lequel la baguette agitatrice (22) s'enfonce par sections dans un coulisseau (14), sur lequel les éléments constitutifs (2, 4) prennent appui, qui est guidé le long de la zone de joint sur un côté des éléments constitutifs opposé à l'outil (10) des éléments constitutifs (2, 4), **caractérisé par le fait que** la baguette agitatrice (22) s'enfonce par sections de manière coulissante dans le coulisseau (14).

2. Procédé selon la revendication 1, dans lequel le coulisseau (14) est entrainé par la baguette agitatrice (22) par l'intermédiaire d'une prise active.

3. Procédé selon la revendication 1 ou 2, dans lequel le coulisseau (14) est déplacé par l'intermédiaire d'un propre entraînement qui l'assiste.

4. Procédé selon la revendication 1, 2 ou 3, dans lequel la position de l'outil (10) est définie dans le plan x-y de la zone de joint par l'intermédiaire de la position du coulisseau.

5. Procédé selon au moins l'une des revendications précédentes, dans lequel un alésage traversant est réalisé dans la zone de joint au début du soudage pour créer la prise active entre la baguette agitatrice (22) et le coulisseau (14).

6. Dispositif (1) d'assemblage de deux éléments constitutifs (2, 4) par soudage par friction-malaxage, comportant un outil (10), qui présente une surface d'épaulement (16) pour solliciter les éléments constitutifs avec une force de traitement (2, 4) au niveau d'une zone de joint et une baguette agitatrice (22) pivotable pour malaxer un matériau plastifié ou pour plastifier et malaxer les éléments constitutifs (2, 4) au niveau de la zone de joint, et avec un coulisseau (14) pour supporter les éléments constitutifs (2, 4), qui est guidé en déplacement le long de la zone de joint sur un côté des pièces opposé à l'outil (10) des éléments constitutifs (2, 4), **caractérisé par le fait que** le coulisseau est conçu pour la réception coulissante par sections de la baguette agitatrice (22).

7. Dispositif selon la revendication 6, dans lequel le coulisseau (14) présente un alésage (34) pour la réception d'une partie de tête (40) de la baguette agitatrice (22).

8. Dispositif selon la revendication 6 ou 7, dans lequel un canal (26) est prévu pour recevoir le coulisseau (14), dont la profondeur (t) correspond approximativement à une hauteur maximale (h) du coulisseau (14).

9. Dispositif selon la revendication 8, dans lequel un palier lisse est réalisé entre le coulisseau (14) et le canal (26).

10. Dispositif selon la revendication 8 ou 9, dans lequel au moins une surface d'appui (36) faisant face aux éléments constitutifs (2, 4) et/ou une surface de fond (46) du coulisseau (14) faisant face au canal (26) est pourvue d'un revêtement pour réduire la résistance de friction.

11. Dispositif selon la revendication 8, dans lequel un palier à roulement est réalisé entre le coulisseau (14) et le canal (26).

12. Dispositif selon la revendication 9, 10 ou 11, dans lequel les paliers bloquent tout déplacement du coulisseau (14) dans la direction de l'axe vertical (z) de la zone de joint.

13. Dispositif selon l'une des revendications 6 à 12, dans lequel un entraînement est prévu pour déplacer le coulisseau (14).

14. Dispositif selon l'une des revendications 6 à 13, dans lequel la surface de support (36) du coulisseau (14) est réalisée en forme d'arc dans la direction longitudinale (x) de la zone de joint (x).

15. Dispositif selon l'une des revendications 6 à 14, dans lequel le coulisseau (14) a une partie de nez en forme de coin (54).
